Europäisches Patentamt

European Patent Office

Office européen des brevets

(19)

(11) Veröffentlichungsnummer : **0 377 712 B1**

(12) **EUROPÄISCHE PATENTSCHRIFT**

(45) Veröffentlichungstag der Patentschrift :
22.01.92 Patentblatt 92/04

(51) Int. Cl.⁵ : **F02B 37/00, F02B 37/12**

(21) Anmeldenummer : **89907072.6**

(22) Anmeldetag : **23.06.89**

(86) Internationale Anmeldenummer :
**PCT/DE89/00416**

(87) Internationale Veröffentlichungsnummer :
**WO 90/01112 08.02.90 Gazette 90/04**

(54) **AUFGELADENE KOLBENBRENNKRAFTMASCHINE MIT MEHREREN PARALLEL ARBEITENDEN ABGASTURBOLADERN.**

(30) Priorität : **19.07.88 DE 3824373**
**07.02.89 DE 3903563**

(43) Veröffentlichungstag der Anmeldung :
**18.07.90 Patentblatt 90/29**

(45) Bekanntmachung des Hinweises auf die
Patenterteilung :
**22.01.92 Patentblatt 92/04**

(84) Benannte Vertragsstaaten :
**AT CH DE FR GB IT LI**

(56) Entgegenhaltungen :
**DE-A- 3 411 408**
**DE-C- 3 607 698**

(73) Patentinhaber : **MTU MOTOREN- UND**
**TURBINEN-UNION FRIEDRICHSHAFEN**
**GMBH**
**Olgastrasse 75 Postfach 20 40**
**W-7990 Friedrichshafen 1 (DE)**

(72) Erfinder : **DEUTSCHMANN, Herbert**
**Wachtelweg 9**
**W-7990 Friedrichshafen 5 (DE)**
Erfinder : **SUDMANNS, Hans**
**Wasenöschstrasse 43**
**W-7990 Friedrichshafen 1 (DE)**

EP 0 377 712 B1

## Beschreibung

Die Erfindung bezieht sich auf eine aufgeladene Kolbenbrennkraftmaschine mit mehreren parallel arbeitenden Abgasturboladern gemäß den Merkmalen des Oberbegriffs von patentanspruch 1.

Das Abschalten von Abgasturboladern wird bei Kolbenbrennkraftmaschinen zur Erhöhung von Ladeluftdruck und Ladeluftmenge bei gegenüber dem Vollastbetrieb vermindertem Anfall von Abgasenergie, also im Teillast- und Teildrehzahlbetrieb der Kolbenbrennkraftmaschine, durchgeführt. Dabei arbeitet bei geringem Abgasenergieanfall nur ein Abgasturbolader, dem bei Zunahme der Leistung der Kolbenbrennkraftmaschine nach und nach ein oder mehrere Abgasturbolader parallel zugeschaltet werden, bis schließlich bei Vollastbetrieb alle vorhandenen Abgasturbolader arbeiten.

Eine gattungsgemäße Kolbenbrennkraftmaschine ist aus der DE 34 11 408 C2 bekannt. Bei kleiner Last der Kolbenbrennkraftmaschine wird der eine Abgasturbolader durch eine vom Ladeluftdruck gesteuerte Abgas-Absperreinrichtung von der Abgassammelleitung getrennt. Eine Ladeluft-Absperreinrichtung in der Saugleitung des Ladeluftverdichters verhindert dabei das Abströmen von Ladeluft aus der Ladeluftsammelleitung. Im gesamten Verdichterteil des abgeschalteten Abgasturboladers baut sich von der Ladeluftsammelleitung her bis zur Ladeluft-Absperreinrichtung der momentan herrschende Ladeluftdruck auf.

Mit dieser bekannten Anordnung ist der Nachteil verbunden, daß die Forderung nach rascher und hoher Lastaufschaltung nur unzureichend erfüllbar ist. Die Kolbenbrennkraftmaschine kann der gewünschten Lastaufschaltung erst folgen, wenn der Zuschaltvorgang eines vorher abgeschalteten Abgasturboladers beendet ist. Der Ablauf ist aber dadurch verzögert, daß der Ladeluftverdichter des zugeschalteten Abgasturboladers eine gewisse Zeit braucht, um den in seiner Saugleitung stromab der Ladeluft-Absperreinrichtung zunächst noch herrschenden Ladeluftdruck auf den Öffnungsdruck der Ladeluft-Absperreinrichtung abzubauen.

Ein weiterer Nachteil der bekannten Anordnung besteht darin, daß das Laufzeug des zugeschalteten Abgasturboladers zunächst auf eine Überdrehzahl beschleunigt wird, was ebenfalls auf den verzögerten Druckabbau in der Saugleitung des zugehörigen Ladeluftverdichters zurückzuführen ist. Denn solange am Ladeluftverdichter zwischen Saug- und Druckseite keine Druckdifferenz besteht, ist seine Leistungsaufnahme gegenüber der an der zugeordneten Abgasturbine bereits verfügbaren Antriebsleistung klein. Das Gleichgewicht zwischen abgegebener und aufgenommener Leistung eines Abgasturboladers ergibt sich im Zeitpunkt des Zuschaltbeginns in einem Bereich des Abgasturbolader-Kennfeldes unzulässig hoher Drehzahl. Diese hohe Drehzahl hat aber sowohl thermische als auch mechanische Belastung des Abgasturbolader-Laufzeugs zur Folge, wodurch die Lebensdauer gemindert wird.

Die geschilderten Nachteile treten sowohl bei Kolbenbrennkraftmaschinen mit einstufiger als auch bei zweistufiger Aufladung auf. Der einzige Unterschied besteht darin, daß bei einstufiger Aufladung beide Probleme an ein und demselben Abgasturbolader auftreten und bei zweistufiger Aufladung die Schaltverzögerung den Niederdruck-Abgasturbolader und das Überdrehzahlproblem den Hochdruck-Abgasturbolader betrifft.

Es ist deshalb Aufgabe der Erfindung, für eine gattungsgemäße Kolbenbrennkraftmaschine eine Anordnung zu schaffen, die eine rasche Lastaufschaltung auf Nennleistung erlaubt und thermische und/oder mechanische Überlastung des zuzuschaltenden Abgasturboladers vermeidet.

Diese Aufgabe wird erfindungsgemäß durch das kennzeichnende Merkmal von Patentanspruch 1 gelöst. Das Öffnen der Bypaß-Absperreinrichtung im Zeitpunkt der Zuschaltauslösung bewirkt eine sofortige Druckentlastung in der Saugleitung des zugeschalteten Ladeluftverdichters. Damit sind luftseitig am zugeschalteten Abgasturbolader sehr schnell die für seinen optimalen Betrieb erforderlichen Bedingungen hergestellt.

Die vorteilhafte weitere Ausgestaltung der Erfindung wird mit den Merkmalen der Ansprüche 2 bis 4 erreicht.

Für eine gattungsgemäße Kolbenbrennkraftmaschine mit zweistufiger Aufladung ergibt sich eine vorteilhafte Weiterbildung der Erfindung mit den Merkmalen der Ansprüche 5 bis 16.

Die mit der Erfindung erzielten Vorteile bestehen insbesondere darin, daß die Behinderung der Lastaufschaltung durch die Schaltverzögerung beim Zuschalten eines Abgasturboladers beseitigt ist, daß die beim Zuschalten eines Abgasturboladers auftretende Überdrehzahl vermieden ist, daß bei zweistufiger Aufladung auch die Beschleunigung des zugeschalteten Niederdruck-Abgasturboladers verbessert ist und daß sich eine einfache Steuerung der Absperreinrichtung ergibt, die die zwischen den Saugleitungen der Ladeluftverdichter angeordneten Bypaßleitung beherrscht, da eine Überwachung auf Schließen entfällt.

Ausführungsbeispiele der Erfindung sind in der Zeichnung dargestellt und werden nachstehend näher beschrieben. Es zeigen:

Fig. 1 Aufladegruppe mit zwei einstufigen Abgasturboladern einer Kolbenbrennkraftmaschine;

Fig. 2 Bypaß-Absperreinrichtung mit selbstschließendem Verschlußteil gemäß Einzelheit II in Fig. 1 und Fig. 3;

Fig. 3 Aufladegruppe mit zwei zweistufigen Abgasturboladern einer Kolbenbrennkraftmaschine;

Fig. 4 Bypaß-Absperreinrichtung mit gesteuertem Verschlußteil gemäß Einzelheit IV in Fig. 3;

Fig. 5 Abgas-Absperreinrichtung mit Abgas-Bypaßleitung gemäß Einzelheit V in Fig. 3.

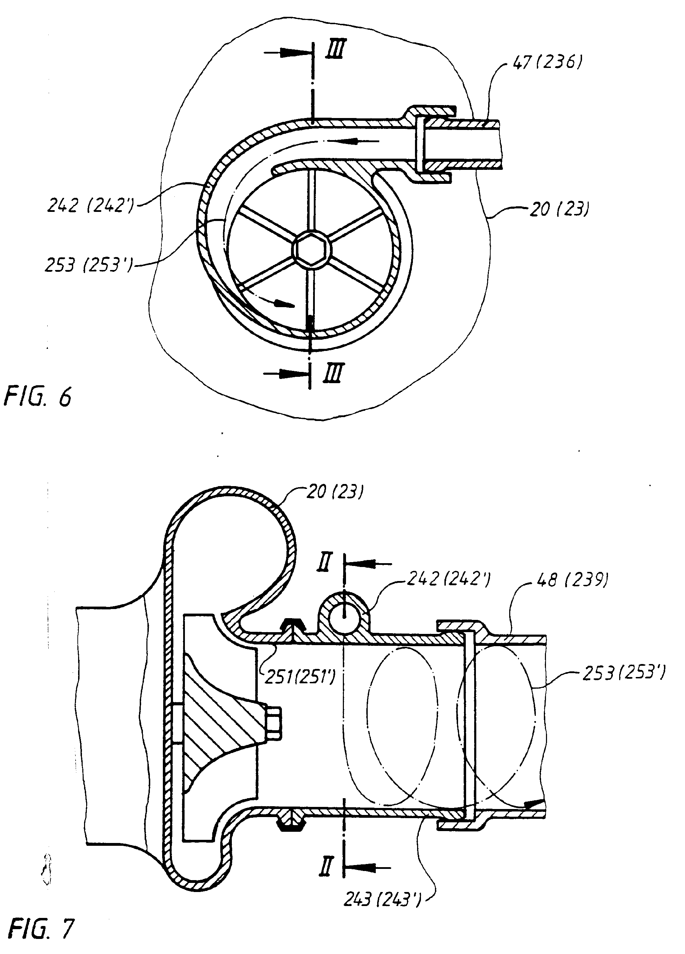

Fig. 6 Querschnitt eines Verbindungsstutzens einer Abgasturbine im Bereich der Abgas-Bypaßmündung nach Linie II-II in Fig. 7;

Fig. 7 Längsschnitt durch eine Abgasturbine und einen Verbindungsstutzen nach Linie III-III in Fig. 6;

Fig. 8 Aufladegruppe mit zwei zweistufigen Abgasturboladern einer Kolbenbrennkraftmaschine und zwei Abgas-Bypaßleitungen;

Fig. 9 Schematische Darstellung des Schaufelgitters der Hochdruckturbine;

Fig. 10 Schematische Darstellung des Schaufelgitters der Niederdruckturbine.

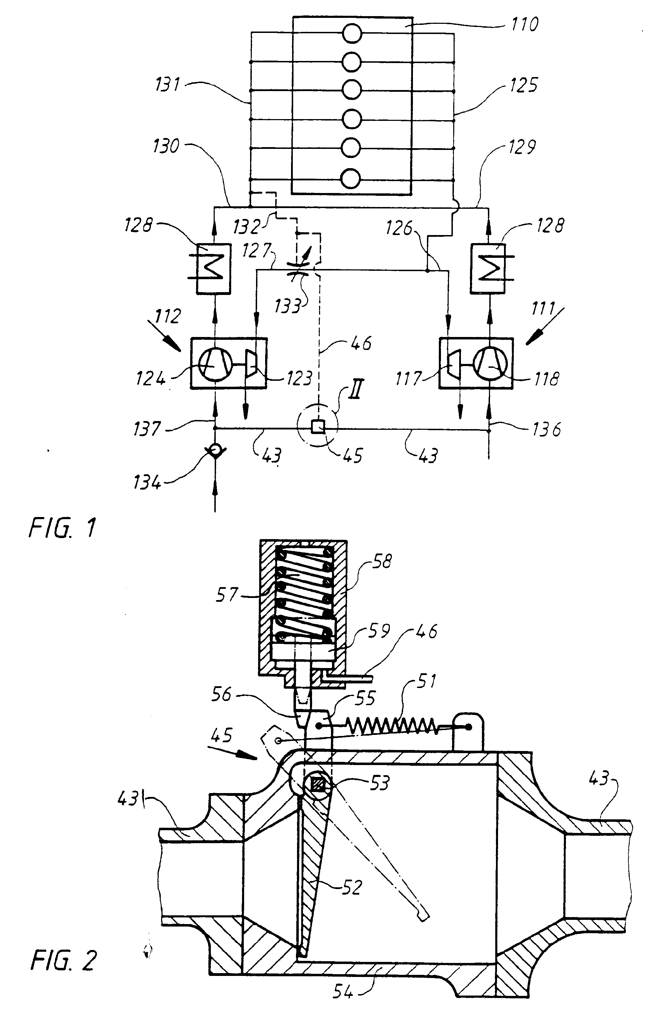

Eine aufgeladene Kolbenbrennkraftmaschine 110 ist gemäß Fig. 1 mit einem abgas- und ladeluftseitig dauernd zugeschalteten Abgasturbolader 111 und einem ab- und zuschaltbar ausgebildeten Abgasturbolader 112 ausgerüstet. Der dauernd zugeschaltete Abgasturbolader 111, der für die Ladeluftversorgung der Kolbenbrennkraftmaschine bei Leerlauf und niedriger Last sorgt, besteht aus einer Abgasturbine 117 und einem Ladeluftverdichter 118. Der abschaltbare Abgasturbolader 112 besteht aus einer Abgasturbine 123 und einem Ladeluftverdichter 124.

Die beiden Abgasturbolader 111, 112 werden von einer Abgassammelleitung 125 über Abgasleitungen 126, 127 mit dem Abgas der Kolbenbrennkraftmaschine 110 versorgt. Ihre Ladeluft liefern sie über Ladeluftkühler 128 und Ladeluftleitungen 129, 130 in die Ladeluftsammelleitung 131 der Kolbenbrennkraftmaschine 110.

Bei Leerlauf und kleiner Last der Kolbenbrennkraftmaschine 110 wird der Abgasturbolader 112 durch eine vom Ladeluftdruck in der Ladeluftsammelleitung 131 über eine Steuerleitung 132 gesteuerte Abgas-Absperreinrichtung 133 von der Abgassammelleitung 125 getrennt. Eine Ladeluft-Absperreinrichtung 134 in der Saugleitung 137 verhindert dabei das Abströmen von Ladeluft aus der Ladeluftsammelleitung 131 über den Abgasturbolader 112. Im gesamten Verdichterteil des abgeschalteten Abgasturboladers 112 baut sich von der Ladeluftsammelleitung 131 her bis vor die Ladeluft-Absperreinrichtung 134 der momentan herrschende Ladeluftdruck auf.

Eine Bypaßleitung 43, die von einer steuerbaren Bypaß-Absperreinrichtung 45 beherrscht wird, verbindet die Saugleitung 137 des Ladeluftverdichters 124 des abschaltbaren Abgasturboladers 112 stromab der Ladeluft-Absperreinrichtung 134 mit der Saugleitung 136 des Ladeluftverdichters 118 des nicht abschaltbaren Abgasturboladers 111.

Die Bypaß-Absperreinrichtung 45 besitzt ein durch die Kraft einer Feder 51 selbsttätig schließendes Verschlußteil 52, das als pendelnde, mit der Achse 53 drehfest verbundene Klappe ausgebildet ist. Die durch das Gehäuse 54 der Bypaß-Absperreinrichtung 45 nach außen geführte Achse 53 trägt einen drehfest mit ihr verbundenen Hebel 55, an dem die Feder 51 befestigt ist. Die Schließstellung des Verschlußteils 52 ist bei abgeschaltetem Abgasturbolader 112 durch einen mit Hebel 55 zusammenwirkenden, fernbetätigbarem Riegel 56 arretiert. Der Riegel 56 bildet die Kolbenstange eines in einem Gehäuse 58 geführten Kolbens 59, der durch eine Druckfeder 57 in Arretier- und durch Steuerdruck in Entriegelungsstellung bringbar ist. Der Steuerdruck wird über Steuerleitung 46 zugeführt, die mit der Steuerleitung 132 für die Betätigung der Abgas-Absperreinrichtung 133 verbunden ist.

Wenn bei zunehmender Leistung der Kolbenbrennkraftmaschine 110 die obere Leistungsgrenze des dauernd eingeschalteten Abgasturboladers 111 erreicht ist, wird, gesteuert durch den Ladeluftdruck in der Ladeluftsammelleitung 131 über die Steuerleitung 132, die Abgas-Absperreinrichtung 133 geöffnet. Der bisher abgeschaltete Abgasturbolader 112 wird dadurch mit Abgas der Kolbenbrennkraftmaschine beaufschlagt. Gleichzeitig mit dem Öffnen der Abgas-Absperreinrichtung 133 wird die Bypaß-Absperreinrichtung 45 durch den Druck in Steuerleitung 46 entriegelt. Die am Verschlußteil 52 am Zuschaltbeginn noch vorhandene Druckdifferenz, die sich aus dem Unterschied des in Saugleitung 137 des Ladeluftverdichters 124 vom Abschaltzustand her noch anstehenden Überdrucks (Ladeluftdruck) und den Unterdruck in der Saugleitung 136 des Ladeluftverdichters 118 ergibt, führt zum Aufschwingen des Verschlußteils 52. Dadurch erfolgt über die Bypaßleitung 43 ein sofortiger Druckabbau des Überdrucks in der Saugleitung 137 bis zu einer durch die Rückstellkraft der Feder 51 definierten Druckdifferenz. Das heißt, bevor ein vollkommener Druckausgleich erfolgt ist, geht das Verschlußteil 52 wieder in die Schließstellung zurück. Die Saugleitungen 136, 137 der Ladeluftverdichter 118, 124 sind damit wieder getrennt. Der zugeschaltete, anlaufende Ladeluftverdichter 124 vermindert mit beginnender Förderung den noch verbliebenen geringen Überdruck in der ihm zugeordnete Saugleitung 137 sehr schnell. Dadurch öffnet sich die Ladeluft-Absperreinrichtung 134, womit der Zuschaltvorgang abgeschlossen ist. Der Zuschaltvorgang ist damit schneller beendet, als wenn, ohne Bypaßleitung 43, der Druckabbau in Saugleitung 137 nur über die beginnende Ladeluftförderung des zugeschalteten Abgasturboladers 112 erfolgen müßte. Die Lastaufschaltung der Kolbenbrennkraftmaschine ist durch den Zuschaltvorgang eines Abgasturboladers nicht mehr begrenzt.

3

Mit dem raschen Druckabbau in der Saugleitung 137 des zugeschalteten Ladeluftverdichters 124 wird aber auch die unzulässige Überdrehzahl des Laufzeugs vermieden. Denn die Leistungsaufnahme des Ladeluftverdichters 124 entspricht nun gleich nach Auslösen der Zuschaltung der von der Abgasturbine 123 abgegebenen Leistung. Der Abgasturbolader arbeitet dann im Nennbereich seines Kennfeldes bei zulässiger Drehzahl.

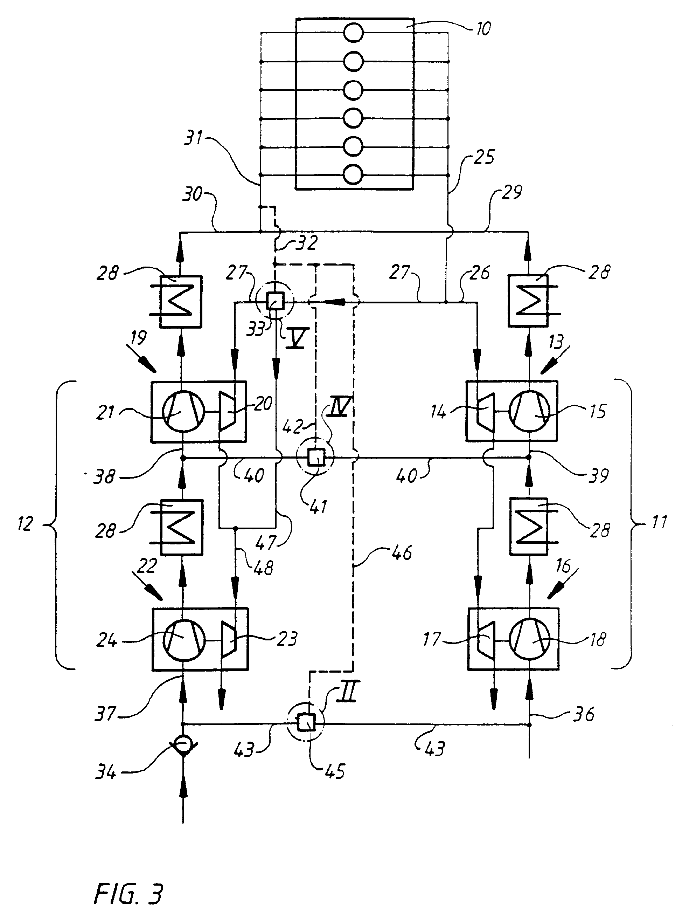

In Fig. 3 ist eine aufgeladene Kolbenbrennkraftmaschine 10 dargestellt, bei der jeder Abgasturbolader aus einer zweistufigen Abgasturboladergruppe 11, 12 besteht und die Abgasturboladergruppe 12 ab- und zuschaltbar ausgebildet ist. Die dauernd eingeschaltete Abgasturboladergruppe 11 umfaßt einen Hochdruck-Abgasturbolader 13 mit einer Hochdruckturbine 14 und einem Hochdruckverdichter 15 sowie einen Niederdruck-Abgasturbolader 16 mit einer Niederdruckturbine 17 und einem Niederdruckverdichter 18. Die abschaltbare Abgasturboladergruppe 12 besteht aus einem Hochdruck-Abgasturbolader 19 mit einer Hochdruckturbine 20 und einem Hochdruckverdichter 21 sowie einem Niederdruck-Abgasturbolader 22 mit einer Niederdruckturbine 23 und einem Niederdruckverdichter 24. Die Abgasturboladergruppen 11 und 12 werden von einer Abgassammelleitung 25 über Abgasleitungen 26 und 27 mit Abgas versorgt. Ihre Ladeluft liefern sie über Ladeluftkühler 28, Ladeluftleitungen 29, 30 und über eine Ladeluftsammelleitung 31 in die Kolbenbrennkraftmaschine 10.

Wie für die Kolbenbrennkraftmaschine nach Fig. 1 bereits beschrieben, ist auch bei der Kolbenbrennkraftmaschine 10 mit zweistufiger Aufladung eine Bypaßleitung 43 angeordnet, die von der Bypaß-Absperreinrichtung 45 beherrscht wird. Bypaßleitung 43 verbindet bei der Kolbenbrennkraftmaschine 10 jedoch die Saugleitung 37 des Niederdruckverdichters 24 der abschaltbaren Abgasturboladergruppe 12 stromab der Ladeluft-Absperreinrichtung 34 mit der Saugleitung 36 des Niederdruckverdichters 18 der nicht abschaltbaren Abgasturboladergruppe 11.

Zusätzlich ist eine weitere Bypaßleitung 40 vorhanden, die die Saugleitung 38 des Hochdruckverdichters 21 der abschaltbaren Abgasturboladergruppe 12 mit der Saugleitung 39 des Hochdruckverdichters 15 der nicht abschaltbaren Abgasturboladergruppe 11 verbindet. In der weiteren Bypaßleitung 40 ist eine Bypaß-Absperreinrichtung 41 angeordnet, die über eine Steuerleitung 42 mit der Steuerleitung 32 für die Abgas-Absperreinrichtung 33 verbunden ist.

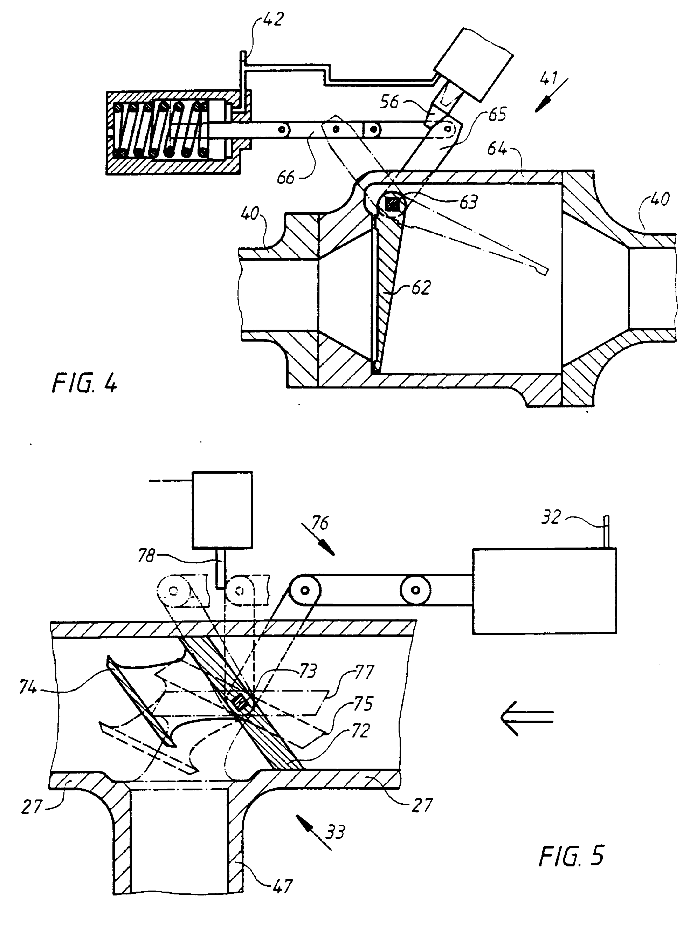

Die Bypaß-Absperreinrichtung 41 gemäß Fig. 4 ist mit einem als Klappe ausgebildeten, drehfest mit der Achse 63 verbundenen Verschlußteil 62 ausgestattet. Die durch das Gehäuse 64 nach außen geführte Achse 63 trägt einen drehfest mit ihr verbundenen Hebel 65, der mit einem über die Steuerleitung 42 fernbetätigbaren Verstellmechanismus 66 gekoppelt ist. Die Schließstellung des Verschlußteils 62 ist bei abgeschalteter Abgasturboladergruppe 12 durch einen mit Hebel 65 zusammenwirkenden, fernbetätigbaren Riegel 56, wie für Fig. 3 beschrieben, arretiert.

Die ab- und zuschaltbare Abgasturboladergruppe 12 ist ferner mit einer steuerbaren Abgas-Bypaßleitung 47 ausgestattet, die an der Abgas-Absperreinrichtung 33 beginnt und unter Umgehung der Hochdruckturbine 20 des Hochdruck-Abgasturboladers 19 in die Niederdruck-Abgasleitung 48 vor der Niederdruckturbine 23 des Niederdruck-Abgasturboladers 22 mündet. Der aus der Hochdruck-Abgasleitung 27 in die Abgas-Bypaßleitung 47 abzuzweigende Abgasmassenstrom ist durch entsprechende Dimensionierung des Durchfluß-Querschnittes der Abgas-Bypaßleitung 47 bzw. durch eine nicht dargestellte Drosseleinrichtung bestimmbar.

Die Abgas-Absperreinrichtung 33 gemäß Fig. 5 ist mit einem als drehbare Scheibe ausgebildeten, mit einer Achse 73 drehfest verbundenen ersten Verschlußteil 72 für die Sperrung der Abgasleitung 27 ausgestattet, das stromauf der Abzweigung der Abgas-Bypaßleitung 47 angeordnet ist. Ein zweites Verschlußteil 74 für die Sperrung der Abgas-Bypaßleitung 47 ist mit dem ersten Verschlußteil 72 gekoppelt. Die Koppelung ist so getroffen, daß die Betätigung der Abgas-Absperreinrichtung 33 zum Öffnen der Abgasleitung 27 das Schließen der Abgas-Bypaßleitung 47 bewirkt. Der Verstellmechanismus 76 zum Betätigen der Abgas-Absperreinrichtung 33 weist eine durch einen steuerbaren Anschlag 78 aufhebbare Raststellung 75 auf, die zwischen 10 und 60 % der Vollöffnung des ersten Verschlußteils 72 liegt. Das zweite Verschlußteil 74 ist in Bezug auf die Abgasleitung 27 derart angeordnet, daß sich bei Raststellung 75 eine Drosselwirkung auf die Abgasleitung 27 ergibt. Abhängig von einer auf den steuerbaren Anschlag 78 wirkenden Betriebsgröße der Kolbenbrennkraftmaschine 10 oder der zugeschalteten Abgasturboladergruppe 12 erfolgt nach Rücknahme des Anschlags 78 die weitere Betätigung der Abgas-Absperreinrichtung 33 von der Raststellung 75 bis zur Endstellung 77. Mit Erreichen der Endstellung 77 des Verschlußteils 72 ist die Zuschaltung beendet. Dabei ist dann die Abgas-Bypaßleitung 47 durch Verschlußteil 74 verschlossen und der Durchgang in Abgasleitung 27 voll geöffnet.

Bei Leerlauf und kleiner Last der Kolbenbrennkraftmaschine 10 ist die Abgasturboladergruppe 12 durch die vom Ladeluftdruck in der Ladeluftsammelleitung 31 über eine Steuerleitung 32 gesteuerte Abgas-Absperreinrichtung 33 von der Abgassammelleitung 25 getrennt. Die Ladeluft-Absperreinrichtung 34 in der Saugleitung 37 des Niederdruckverdichters 24 verhindert dabei das Abströmen von Ladeluft aus der Ladeluftsammelleitung 31 über die abgeschaltete Abgasturboladergruppe 12. Im gesamten Verdichterteil der abgeschalteten Abgasturboladergruppe 12 baut sich von der Ladeluftsammelleitung 31 her bis vor die Ladeluft-Absperreinrichtung 34 der momentan herrschend Ladeluftdruck auf.

Wenn bei zunehmender Leistung der Kolbenbrennkraftmaschine 10 die obere Leistungsgrenze der dauernd eingeschalteten Abgasturboladergruppe 11 erreicht ist, wird, gesteuert durch den Ladeluftdruck in der Ladeluftsammelleitung 31 die Abgas-Absperreinrichtung 33 geöffnet und die bisher abgeschaltete Abgasturboladergruppe 12 mit Abgas der Kolbenbrennkraftmaschine 10 beaufschlagt. Ohne besondere Maßnahme würde das Laufzeug des Hochdruck-Abgasturboladers 19 nach ausgelöster Zuschaltung schneller beschleunigt, als das Laufzeug des Niederdruck-Abgasturboladers 22, und sehr rasch eine unzulässige Drehzahl erreichen. Ursache dafür ist zum einen die thermodynamisch bedingte geringere Baugröße und dem daraus resultierenden kleineren Massenträgheitsmoment des Hochdruck-Abgasturboladers 19 gegenüber dem Niederdruck-Abgasturbolader 22. Zum anderen wirkt sich ein verzögerter Druckabbau in der Saugleitung 38 des Hochdruckverdichters 21 unterstützend auf die unzulässige Drehzahlsteigerung aus. Andererseits erleidet der Niederdruck-Abgasturboladers 22 nach Auslösung einer Zuschaltung eine verzögerte Beschleunigung, weil der Niederdruckturbine 23 infolge der vorgeschalteten Hochdruckturbine 20 nicht gleich die erforderliche Abgasenergie zur Verfügung steht. Um die Schaltverzögerung und die unzulässige Drehzahl beim Zuschalten der aus Hoch- und Niederdruck-Abgasturbolader 19, 22 bestehenden Abgasturboladergruppe 12 zu vermeiden, sind drei Maßnahmen gleichzeitig wirksam.

1. Das Öffnen der Abgas-Absperreinrichtung 33 bis zur Raststellung 75 bewirkt eine Drosselung des Querschnitts der Abgasleitung 27 bei gleichzeitiger Öffnung der Abgas-Bypaßleitung 47. Unmittelbar nach Auslösung der Zuschaltung der Abgasturboladergruppe 12 strömt ein Teil der Abgasmenge direkt in die Niederdruck-Abgasleitung 48 der Niederdruckturbine 23. Entsprechend reduziert sich die Abgasmenge für die Hochdruckturbine 20.

2. Das Entriegeln der Bypaß-Absperreinrichtung 45 in der Bypaßleitung 43 hat die gleiche Wirkung auf den Druckabbau in der Saugleitung 37 wie vorstehend bereits für das Beispiel nach Fig. 1 beschrieben. Der Druckabbau in der Saugleitung 37 schafft die Voraussetzungen für einen raschen Förderbeginn des Niederdruckverdichters 24, so daß nach Zuschaltung die durch Maßnahme 1 frühzeitig verfügbare Antriebsleistung der Niederdruckturbine 23 auch abgenommen wird.

3. Das Betätigen der Bypaß-Absperreinrichtung 41 in der Bypaßleitung 40 führt zum Druckabbau in der Saugleitung 38 des Hochdruckverdichters 21 auf das Druckniveau in der Saugleitung 39 des dauernd eingeschalteten Hochdruckverdichters 15. Damit ist auch für den Hochdruckverdichter 21 die Voraussetzung für einen regulären Förderbeginn geschaffen. Die an der Hochdruckturbine 20 verfügbare Antriebsleistung kann somit vom Hochdruckverdichter 21 auch abgenommen werden.

Der zugeschaltete Hochdruckverdichter 21 kann zudem, unabhängig vom momentanen Betriebszustand des zugeordneten Niederdruckverdichters 24, über die Bypaßleitung 40 gekühlte Luft, mit einem zum momentanen Betriebspunkt passenden Vordruck, aus der Leitung 39 der ständig in Betrieb befindlichen Abgasturboladergruppe 11 ansaugen. Die Belastung des Hochdruck-Abgasturboladers 19 durch nutzbringende Ladeluftförderung in Verbindung mit der durch Maßnahme 1 verminderten Anfangs-Abgasmenge verhindert das Erreichen einer unerwünschte Überdrehzahl seines Laufzeugs.

Für den Niederdruck-Abgasturbolader 22 ergibt sich mit der Abgas-Bypaßleitung 48 ein vorgezogener Förderbeginn. In Verbindung mit der verringerten Beschleunigung des Hochdruck-Abgasturboladers 19 wird zwischen beiden angenähert Gleichlauf erreicht, was den Ablauf einer Zuschaltung erheblich verkürzt und die Lastaufschaltung für die Kolbenbrennkraftmaschine 10 verbessert. Nach erfolgter Zuschaltung der Abgasturboladergruppe 12 kann die Bypaßleitung 40 auf Durchgang geschaltet bleiben, da in den verbundenen Saugleitungen 38 und 39 der im Zuschaltbetrieb parallel arbeitenden Abgasturboladergruppen 11, 12 gleiche Drücke herrschen. Das Verschlußteil 62 der Bypaß-Absperreinrichtung 41 kann auch in Form des Verschlußteils 72 in Abgas-Absperreinrichtung 33 ausgebildet sein.

Die Wirkung des über die Abgas-Bypaßleitung 47 der Niederdruckturbine 23 zugeführten Abgasmassenstroms wird noch dadurch verbessert, daß die Einleitung in die Niederdruck-Abgasleitung 48 der Niederdruckturbine 23 in unmittelbarer Nähe der Ausströmöffnung 251 der Hochdruckturbine 20 erfolgt. Die Mündung der Abgas-Bypaßleitung 47 in die Niederdruck-Abgasleitung 48 ist als Spiralgehäuse 242 ausgebildet, so daß dem aus der Abgas-Bypaßleitung 47 austretenden Abgasmassenstrom eine Drallströmung mit bestimmter Strömungsrichtung 253 aufgeprägt wird. Das Spiralgehäuse 242 ist Bestandteil eines zwischen Hochdruck- und Niederdruckturbine 20, 23 angeordneten auswechselbaren Verbindungsstutzens 243. Weder das Gehäuse der Hochdruckturbine 20 noch das Gehäuse der Niederdruckturbine 23 sind durch die Ausbildung des Anschlusses für die Abgas-Bypaßleitung 47 betroffen. Dadurch sind für die schaltbare Abgasturboladergruppe 12 ohne Änderungen die gleichen Abgasturbolader verwendbar, die auch bei der nicht schaltbaren Abgasturboladergruppe 11 eingesetzt sind.

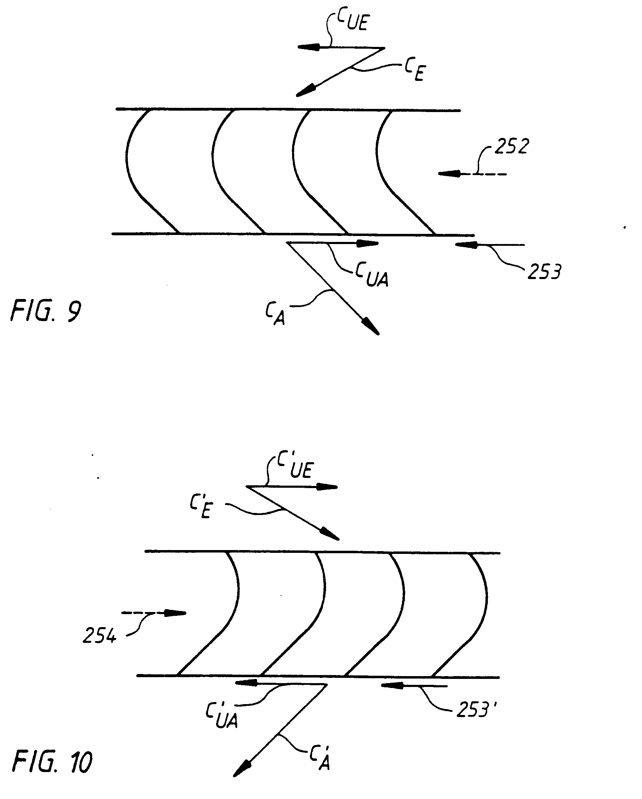

Der am Turbinenschaufelgitter wirksam werdende Drehimpuls ist proportional der Differenz zwischen der Umfangskomponenten $C_{UE}$ der Turbineneintrittsströmung $C_E$ und der Umfangskomponenten $C_{UA}$ der Turbinenaustrittsströmung $C_A$. Für eine gewisse Zeitspanne nach Auslösen einer Zuschaltung der Abgasturboladergruppe 12, wenn das Turbinenschaufelgitter der Hochdruckturbine 20 noch still steht oder sich mit geringer Drehzahl bewegt, ist die Differenz zwischen den Umfangskomponenten $C_{UE}$ und $C_{UA}$ groß. Das ergibt sich daraus, daß in der Anlaufphase des Turbinenlaufrades im Turbinenschaufelgitter eine starke Umlenkung der Strömung stattfindet und die Umfangskomponente $C_{UA}$ der Turbinenaustrittsströmung $C_A$ entgegen der eigentlichen Drehrichtung 252 des Turbinenschaufelgitters gerichtet ist (Fig. 9). Die Strömungsrichtung 253 der Drallströmung, die von dem aus der Abgas-Bypassleitung 47 in den Ausströmbereich der Hochdruckturbine 20 eintretenden Abgasmassenstrom erzeugt wird, ist der Umfangskomponente $C_{UA}$ der Turbinenaustrittsströmung $C_A$ in diesem Betriebsbereich entgegengerichtet. Daraus resultiert eine Verringerung der den Drehimpuls beeinflussenden Umfangsströmung auf der Turbinenaustrittsseite, so daß sich der am Turbinenschaufelgitter der Hochdruckturbine 20 wirksame Drehimpuls in diesem Betriebszustand ebenfalls verringert. Das auf diese Weise verringerte Drehmoment zum Beschleunigen des Laufzeugs des Hochdruck-Abgasturboladers 19 verhindert das Auftreten einer unerwünschten Überdrehzahl nach einer Zuschaltung.

Gleichzeitig ergibt sich für den Niederdruck-Abgasturbolader 22 mit dem Abgasmassenstrom aus der Abgas-Bypaßleitung 47 ein vorgezogener Ladeluft-Förderderbeginn. In Verbindung mit der verringerten Beschleunigung des Hochdruck-Abgasturboladers 19 wird zwischen beiden angenähert Gleichlauf erreicht, was den Ablauf einer Zuschaltung erheblich verkürzt und die Lastaufschaltung für die Kolbenbrennkraftmaschine 10 verbessert.

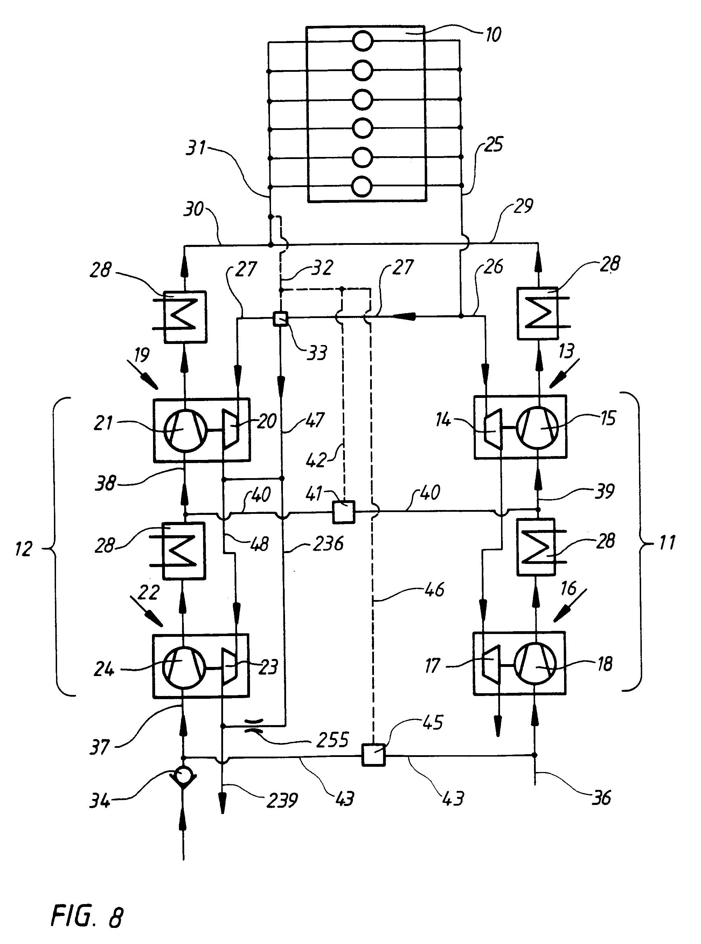

Eine weitere Verbesserung des Gleichlaufs zwischen Hoch- und Niederdruck-Abgasturbolader 19, 22 nach der Zuschaltung und des Lastaufschaltverhaltens der Kolbenbrennkraftmaschine 10 ergibt sich mit der in Fig. 8 dargestellten Anordnung eines weiteren Ausführungsbeispiels. Eine von der Abgas-Bypaßleitung 47 abzweigende Abgas-Bypaßleitung 236 führt zusätzlich zur Abgasleitung 239. Die Mündung der Abgas-Bypaßleitung 236 in die Abgasleitung 239 ist in mittelbarer Nähe der Ausströmöffnung 251′ der Niederdruckturbine 23 angeordnet und ebenfalls als Spiralgehäuse 242′ an einem auswechselbaren Verbindungsstutzen 243′ ausgebildet. Mittels einer in der Abgas-Bypaßleitung 236 angeordneten Drosseleinrichtung 255 ist der Abgasmassenstrom abstimmbar.

Der aus der Abgas-Bypaßleitung 236 austretende Abgasmassenstrom erzeugt in der Abgasleitung 239 eine Drallströmung, die so gerichtet ist, daß sich nach Auslösen einer Zuschaltung eine positive Beeinflussung der Leistung der Niederdruckturbine 23 einstellt.

Auch für die Situation an der Niederdruckturbine gilt, daß der am Turbinenschaufelgitter wirksam werdende Drehimpuls proportional der Differenz zwischen der Umfangskomponenten $C_{UE}'$ der Turbineneintrittsströmung $C_E'$ und der Umfangskomponenten $C_{UA}'$ der Turbinenaustrittsströmung $C_A'$ ist.

In Fig. 10 sind die Strömungsverhältnisse am Turbinenschaufelgitter der Niederdruckturbine 23 nach einer Zuschaltung bei noch stillstehendem oder sich mit geringer Drehzahl bewegenden Laufzeug des Niederdruck-Abgasturboladers 22 dargestellt. Die Strömungsrichtung 253′ der Drallströmung, die von dem aus der Abgas-Bypaßleitung 236 in den Ausströmbereich der Niederdruckturbine 23 eintretenden Abgasmassenstromes erzeugt wird, ist der Umfangskomponente $C_{UA}'$ der Turbinenaustrittsströmung $C_A'$ in diesem Betriebsbereich gleichgerichtet. Daraus resultiert eine Vergrößerung der den Drehimpuls beeinflussenden Umfangsströmung auf der Turbinenaustrittsseite, so daß sich der am Turbinenschaufelgitter der Niederdruckturbine 23 wirksame Drehimpuls in Richtung der eigentlichen Drehrichtung 254 ebenfalls vergrößert.

Die mit der zusätzlichen Abgas-Bypaßleitung 236 erzielbare Drehmomenterhöhung an der Niederdruckturbine 23 bewirkt in Verbindung mit der über die Abgas-Bypaßleitung 47 der Niederuckturbine 23 zugeführten Abgasteilmenge eine rasche Beschleunigung des Laufzeugs des Niederdruck-Abgasturboladers 22 nach einer Zuschaltung. Der für einen raschen Förderbeginn des Niederdruckverdichters 24 nach einer Zuschaltung erforderliche Leistungsüberschuß wird dadurch vergrößert.

Die Kombination der nach einer Zuschaltung kurzfristig verminderten Leistungsaufnahme des Hochdruck-Abgasturboladers 19 mit der gleichzeitig erhöhten Leistungsaufnahme des Niederdruck-Abgasturboladers 22 und den anderen Maßnahmen veimeidet eine spürbare Schaltverzögerung für die Abgasturboladergruppe 12. Gleichzeitig wird auch das Auftreten einer überdrehzahl am Hochdruck-Abgasturbolader verhindert.

**Patentansprüche**

1. Aufgeladene Kolbenbrennkraftmaschine mit mehreren Abgasturboladern, von denen mindestens zwei parallel arbeiten und mindestens einer der Abgasturbolader durch Anordnung jeweils einer steuerbaren Abgas-Absperreinrichtung in der Abgasleitung vor der Abgasturbine und einer selbsttätigen Ladeluft-Absperreinrichtung in der Saugleitung des Ladeluftverdichters ab- und zuschaltbar ausgebildet ist, wobei an jedem schaltbaren Abgasturbolader eine Bypaßleitung mit einer steuerbaren Bypaß-Absperreinrichtung angeordnet ist, dadurch gekennzeichnet, daß die Bypaßleitung (43) als Querverbindung zwischen der Saugleitung (136) des Ladeluftverdichters (118) des nicht abschaltbaren Abgasturboladers (111) und der Saugleitung (137) des Ladeluftverdichters (124) stromab der Ladeluft-Absperreinrichtung (134) des ab- und zuschaltbaren Abgasturboladers (112) ausgebildet ist.

2. Aufgeladene Kolbenbrennkraftmaschine nach Anspruch 1, wobei jedem der parallel arbeitenden Abgasturbolader ein weiterer Abgasturbolader zugeordnet ist, und die zusammenwirkenden beiden Abgasturbolader eine aus Hoch- und Niederdruckstufe bestehende zweistufige Aufladung ergeben, dadurch gekennzeichnet, daß die Bypaßleitung (43) zwischen den Saugleitungen (36, 37) der Ladeluftverdichter (18, 24) der Niederdruckstufen angeordnet ist.

3. Aufgeladene Kolbenbrennkraftmaschine nach Anspruch 1 oder 2, dadurch gekennzeichnet, daß die Bypaß-Absperreinrichtung (45) ein in Richtung auf die Saugleitung (37, 137) des Ladeluftverdichters (24, 124) des schaltbaren Abgasturboladers (12, 112) selbstschließendes Verschlußteil (52) aufweist.

4. Aufgeladene Kolbenbrennkraftmaschine nach Anspruch 3, dadurch gekennzeichnet, daß das Verschlußteil (52) mit einer in der Bypaß-Absperreinrichtung (45) angeordneten Schließstellungs-Arretiereinrichtung zusammenwirkt.

5. Aufgeladene Kolbenbrennkraftmaschine nach Anspruch 4, dadurch gekennzeichnet, daß die Schließstellungs-Arretiereinrichtung über eine mit der Steuerleitung (32, 132) für die Abgas-Absperreinrichtung (33, 133) verbundene Steuerleitung (46) fern betätigbar ist.

6. Aufgeladene Kolbenbrennkraftmaschine nach Anspruch 2, dadurch gekennzeichnet, daß eine weitere Bypaßleitung (40) als Querverbindung zwischen der Saugleitung (39) des Hochdruck-Ladeluftverdichters (15) der nicht abschaltbaren Abgasturboladergruppe (11) und der Saugleitung (38) des Hochdruck-Ladeluftverdichters (21) der ab- und zuschaltbaren Abgasturboladergruppe (12) angeordnet ist.

7. Aufgeladene Kolbenbrennkraftmaschine nach Anspruch 6, dadurch gekennzeichnet, daß das Verschlußteil (62) der Bypaß-Absperreinrichtung (41) in der weiteren Bypaßleitung (40) über eine mit der Steuerleitung (32) für die Abgas-Absperreinrichtung (33) verbundene Steuerleitung (42) fernbetätigbar ist.

8. Aufgeladene Kolbenbrennkraftmaschine nach Anspruch 2, dadurch gekennzeichnet, daß eine Abgas-Bypaßleitung (47) angeordnet ist, die an der Abgas-Absperreinrichtung (33) beginnt und in die Niederdruck-Abgasleitung (48) vor der Niederdruckturbine (23) des Niederdruck-Abgasturboladers (22) mündet.

9. Aufgeladene Kolbenbrennkraftmaschine nach Anspruch 8, dadurch gekennzeichnet, daß die Abgas-Absperreinrichtung (33) ein erstes Verschlußteil (72) für die Abgasleitung (27) aufweist, das mit einem zweiten Verschlußteil (74) für die Abgas-Bypaßleitung (47) derart gekoppelt ist, daß das Öffnen des ersten Verschlußteiles (72) das Schließen des zweiten Verschlußteiles (74) bewirkt.

10. Aufgeladene Kolbenbrennkraftmaschine nach Anspruch 9, dadurch gekennzeichnet, daß die Betätigung der Abgas-Absperreinrichtung (33) eine Raststellung (75) aufweist, die zwischen 10 bis 60 % der Vollöffnung des ersten Verschlußteiles (72) wirksam ist und bei der die Stellung des zweiten Verschlußteils (74) den Querschnitt der Abgasleitung (27) beeinflußt.

11. Aufgeladene Kolbenbrennkraftmaschine nach Anspruch 8, dadurch gekennzeichnet, daß die Mündung der Abgas-Bypaßleitung (47) in unmittelbarer Nähe der Ausströmöffnung (251) der Hochdruckturbine (20) angeordnet ist und daß der aus der Abgas-Bypaßleitung (47) austretende Abgasmassenstrom in der Niederdruck-Abgasleitung (48) eine Drallströmung erzeugt, deren Strömungsrichtung (253) dem nach einer Zuschaltung beim Anlaufen des Laufzeugs des Hochdruck-Abgasturboladers (19) auftretenden Austrittsdrall der Hochdruckturbine (20) entgegengerichtet ist.

12. Aufgeladene Kolbenbrennkraftmaschine nach Anspruch 11, dadurch gekennzeichnet, daß von der Abgas-Bypaßleitung (47) abzweigend eine zusätzliche Abgas-Bypaßleitung (236) ausgeht, deren Mündung in unmittelbarer Nähe der Ausströmöffnung der Niederdruckturbine (23) in der Abgasleitung (239) angeordnet ist.

13. Aufgeladene Kolbenbrennkraftmaschine nach Anspruch 12, dadurch gekennzeichnet, daß der aus der Abgas-Bypaßleitung (236) austretende Abgasmassenstrom in der Abgasleitung (239) eine Drallströmung erzeugt, deren Strömungsrichtung dem nach einer Zuschaltung beim Anlaufen des Laufzeugs des Niederdruck-Abgasturboladers (22) auftretenden Austrittsdrall der Niederdruckturbine (23) gleichgerichtet ist.

14. Aufgeladene Kolbenbrennkraftmaschine nach Anspruch 11 oder 12, dadurch gekennzeichnet, daß die Mündung der Abgas-Bypaßleitung (47) bzw. der Abgas-Bypaßleitung (236) als Spiralgehäuse (242, 242') ausgebildet ist.

15. Aufgeladene Kolbenbrennkraftmaschine nach Anspruch 14, dadurch gekennzeichnet, daß der Anschluß der Abgas-Bypaßleitung (47) bzw. der Abgas-Bypaßleitung (236) an einem auswechselbaren Verbindungsstutzen (243, 243') ausgebildet ist.

16. Aufgeladene Kolbenbrennkraftmaschine nach Anspruch 12, dadurch gekennzeichnet, daß in der Abgas-Bypaßleitung (236) eine den Massendurchsatz beeinflussende Drosseleinrichtung (255) angeordnet ist.

## Claims

1. A supercharged reciprocating internal-combustion engine having a plurality of exhaust-driven turbochargers, at least two of which operate in parallel and at least one of the exhaust-driven turbochargers is designed to be cut in and out by providing respectively a controllable exhaust-gas shut-off device in the exhaust duct upstream of the exhaust-driven turbine and an automatic air-charge shut-off device in the intake duct of the air-charge compressor, wherein each disconnectable exhaust-driven turbocharger is provided with a by-pass duct having a controllable by-pass shut-off device, characterised in that the by-pass duct (43) is in the form of a cross connection between the intake duct (136) of the air-charge compressor (118) of the exhaust-driven turbocharger (111) which cannot be cut out and the intake duct (137) of the air-charge compressor (124) downstream of the air-charge shut-off device (134) of the exhaust-driven turbocharger (112) which can be cut in and out.

2. A supercharged reciprocating internal-combustion engine according to Claim 1, wherein each of the exhaust-driven turbochargers operating in parallel is associated with another exhaust-driven turbocharger, and the two co-operating exhaust-driven turbochargers provide two-stage turbocharging comprising a high-pressure stage and a low-pressure stage, characterised in that the by-pass duct (43) is disposed between the intake ducts (36, 37) of the air-charge compressors (18, 24) of the low-pressure stages.

3. A supercharged reciprocating internal-combustion engine according to Claim 1 or 2, characterised in that the by-pass shut-off device (45) has a closure member (52) closing automatically in the direction of the intake duct (37, 137) of the air-charge compressor (24, 124) of the disconnectable exhaust-driven turbocharger (12, 112).

4. A supercharged reciprocating internal-combustion engine according to Claim 3, characterised in that the closure member (52) co-operates with a closure position locating means disposed in the by-pass shut-off device (45).

5. A supercharged reciprocating internal-combustion engine according to Claim 4, characterised in that the closure position locating means can be remotely operated via a control line (46) connected to the control line (32, 132) for the exhaust-gas shut-off device (33, 133).

6. A supercharged reciprocating internal-combustion engine according to Claim 2, characterised in that a further by-pass duct (40) is provided as a cross connection between the intake duct (39) of the high-pressure air-charge compressor (15) of the exhaust-driven turbocharger group (11) which cannot be cut out and the intake duct (38) of the high-pressure air-charge compressor (21) of the exhaust-driven turbocharger group (12) which can be cut in and out.

7. A supercharged reciprocating internal-combustion engine according to Claim 6, characterised in that the closure member (62) of the by-pass shut-off device (41) in the further by-pass duct (40) can be remotely operated via a control line (42) connected to the control line (32) for the exhaust-gas shut-off device (33).

8. A supercharged reciprocating internal-combustion engine according to Claim 2, characterised in that a by-pass duct (47) is provided which starts at the exhaust-gas shut-off device (33) and discharges into the low-pressure exhaust duct (48) upstream of the low-pressure turbine (23) of the low-pressure exhaust-driven turbocharger (22).

9. A supercharged reciprocating internal-combustion engine according to Claim 8, characterised in that the exhaust-gas shut-off device (33) has a first closure member (72) for the exhaust duct (27), which is coupled with a second closure member (74) for the exhaust-gas by-pass duct (47) in such a way that the opening of first closure member (72) induces the closing of the second closure member (74).

10. A supercharged reciprocating internal-combustion engine according to Claim 9, characterised in that the operation of the exhaust-gas shut-off device (33) has a locking position (75) which is operative between 10 to 60 % of full opening of the first closure member (72) and in which the position of the second closure member (74) influences the cross-section of the exhaust duct (27).

11. A supercharged reciprocating internal-combustion engine according to Claim 8, characterised in that the aperture of the exhaust-gas by-pass duct (47) is disposed in the immediate vicinity of the outflow orifice (251) of the high-pressure turbine (20), and in that the mass flow of exhaust gas flowing out of the exhaust-gas by-pass duct (47) induces a swirl flow in the low-pressure exhaust duct (48), the flow direction (253) of which is directed counter to the outflow swirl of the high-pressure turbine (20) occurring after a cutting-in operation during the starting-up of the rotor of the high-pressure exhaust-driven turbocharger (19).

12. A supercharged reciprocating internal-combustion engine according to Claim 11, characterised in that an additional exhaust-gas by-pass duct (236) branches out from the exhaust-gas by-pass duct (47), the aperture of which is disposed in the exhaust duct (239) in the immediate vicinity of the outflow orifice of the low-pressure turbine (23).

13. A supercharged reciprocating internal-combustion engine according to Claim 12, characterised in that the exhaust-gas mass flow flowing out of the exhaust-gas by-pass duct (236) induces a swirl flow in the exhaust duct (239), the flow direction of which is in the same direction as the outflow swirl of the low-pressure turbine (23) occurring after a cutting-in operation during the starting-up of the rotor of the low-pressure exhaust-driven turbocharger (22).

14. A supercharged reciprocating internal-combustion engine according to Claim 11 or 12, characterised in that the aperture of the exhaust-gas by-pass duct (47) and/or of the exhaust-gas by-pass duct (236) is in the form of a spiral housing (242, 242′).

15. A supercharged reciprocating internal-combustion engine according to Claim 14, characterised in that the connection of the exhaust-gas by-pass duct (47) and/or of the exhaust-gas by-pass duct (236) is formed on an interchangeable connecting stub (243, 243′).

16. A supercharged reciprocating internal-combustion engine according to Claim 12, characterised in that a throttle device (255) influencing the mass throughflow is disposed in the exhaust-gas by-pass duct (236).

## Revendications

1. Moteur à combustion interne à pistons, suralimenté, équipé de plusieurs turbocompresseurs à gaz d'échappement, dont au moins deux fonctionnent en parallèle et dont l'un au moins peut être mis en service et hors service par l'entremise d'un dispositif de retenue piloté, monté dans le conduit des gaz en amont de la turbine de ce turbocompresseur, et d'un dispositif automatique de retenue de l'air de suralimentation, monté dans le conduit d'aspiration du compresseur du même turbocompresseur, un conduit de dérivation équipé d'un dispositif de retenue piloté étant disposé sur chacun des turbocompresseurs qui peuvent être mis hors service, moteur caractérisé en ce que le conduit (43) de dérivation fait communiquer transversalement le conduit (136) d'aspiration du compresseur (118) d'air de suralimentation du turbocompresseur (111) en service permanent et le conduit (137) d'aspiration du compresseur (124) du turbocompresseur (112) pouvant être mis hors service, en aval du dispositif (134) de retenue de l'air de suralimentation.

2. Moteur suralimenté selon la revendication 1, sur lequel un autre turbocompresseur est associé à chacun des turbocompresseurs qui fonctionnent en parallèle et les deux turbocompresseurs associés réalisant une suralimentation en deux étapes à étages basse pression et haute pression, caractérisé en ce que le conduit (43) de dérivation est disposé entre les conduits (36, 37) d'aspiration des compresseurs (18, 24) des étages basse pression.

3. Moteur suralimenté selon la revendication 1 ou 2, caractérisé en ce que le dispositif (45) de retenue du conduit de dérivation comporte un organe obturateur (52), qui se ferme automatiquement en pivotant vers le conduit (37 ; 137) d'aspiration du compresseur (24 ; 124) du turbocompresseur (12 ; 112) pouvant être mis hors service.

4. Moteur suralimenté selon la revendication 3, caractérisé en ce que l'organe obturateur (52) coopère avec un dispositif d'immobilisation en position de fermeture, qui est monté dans le dispositif (45) de retenue du conduit de dérivation.

5. Moteur suralimenté selon la revendication 4, caractérisé en ce que le dispositif d'immobilisation en position de fermeture peut être actionné à distance par l'entremise d'un conduit (46) de manoeuvre communiquant avec le conduit (32 ; 132) de manoeuvre du dispositif (33 ; 133) de retenue des gaz d'échappement.

6. Moteur suralimenté selon la revendication 2, caractérisé en ce qu'un autre conduit (40) de dérivation, servant de liaison transversale, est disposé entre le conduit (39) d'aspiration du compresseur (15) haute pression du groupe (11) de turbocompresseurs en service permanent et le conduit (38) d'aspiration du compresseur (21) haute pression du groupe (12) de turbocompresseurs pouvant être mis hors service.

7. Moteur suralimenté selon la revendication 6, caractérisé en ce que l'organe obturateur (62) du dispositif (41) de retenue monté sur l'autre conduit (40) de dérivation peut être actionné à distance par l'entremise d'un conduit (42) de manoeuvre communiquant avec le conduit (32) de manoeuvre du dispositif (33) de retenue des gaz d'échappement.

8. Moteur suralimenté selon la revendication 2, caractérisé en ce qu'il comporte un conduit (47) de dérivation des gaz d'échappement, qui part du dispositif (33) de retenue de ces gaz et débouche, en amont de la turbine (23) du turbocompresseur (22) basse pression, dans le conduit (48) d'alimentation en gaz de cette turbine.

9. Moteur suralimenté selon la revendication 8, caractérisé en ce que le dispositif (33) de retenue des gaz comporte un premier élément obturateur (72) du conduit (27) d'arrivée, qui est accouplé à un second élément obturateur (74) du conduit (47) de dérivation, de façon que l'ouverture de ce premier élément (72) provoque la fermeture du second élément (74).

10. Moteur suralimenté selon la revendication 9, caractérisé en ce que le mécanisme de manoeuvre du dispositif (33) de retenue des gaz comporte une position (75) d'enclenchement, qui agit entre 10 % et 60 % de l'ouverture complète du premier élément obturateur (72) et dans laquelle le second élément obturateur (74) a une position dans laquelle il influe sur la section de passage du conduit (27) d'arrivée.

11. Moteur suralimenté selon la revendication 8, caractérisé en ce que le conduit (47) de dérivation des gaz débouche à proximité immédiate de l'orifice (251) de sortie de la turbine (20) haute pression, et en ce que les gaz qui sortent de ce conduit (47) créent dans le conduit (48) basse pression un courant giratoire de sens (253) opposé à celui du courant giratoire qui existe à la sortie de cette turbine (20) haute pression lorsque l'équipage rotatif du turbocompresseur (19) haute pression commence à tourner après une remise en circuit.

12. Moteur suralimenté selon la revendication 11, caractérisé en ce qu'un conduit (236) auxiliaire de dérivation des gaz part du conduit (47) de dérivation et débouche, dans le conduit (239) d'évacuation, à proximité immédiate de l'orifice de sortie de la turbine (23) basse pression.

13. Moteur suralimenté selon la revendication 12, caractérisé en ce que les gaz qui sortent du conduit (236) de dérivation créent dans le conduit (239) d'évacuation un courant giratoire, qui est orienté dans le même sens que le courant giratoire qui existe à la sortie de la turbine (23) de basse pression lorsque l'équipage rotatif du turbocompresseur (22) basse pression commence à tourner après la remise en circuit.

14. Moteur suralimenté selon la revendication 11 ou 12, caractérisé en ce que le débouché des conduits (47) et (236) de dérivation, respectivement, est formé par un corps (242 ; 242') à volute.

15. Moteur suralimenté selon la revendication 14, caractérisé en ce que les conduits (47; 236) de dérivation sont raccordés à une tubulure (243 ; 243') respective de jonction amovible.

16. Moteur suralimenté selon la revendication 12, caractérisé en ce qu'un dispositif étrangleur (255), agissant sur le débit des gaz, est monté dans le conduit (236) de dérivation auxiliaire.

FIG. 1

FIG. 2

FIG. 3

EP 0 377 712 B1

FIG. 4

FIG. 5

13

FIG. 6

FIG. 7

EP 0 377 712 B1

FIG. 8

15

FIG. 9

FIG. 10